(19) Europäisches Patentamt

European Patent Office

Office européen des brevets

(11) Veröffentlichungsnummer: **0 318 659 B1**

(12) **EUROPÄISCHE PATENTSCHRIFT**

(45) Veröffentlichungstag der Patentschrift: **02.01.92**

(51) Int. Cl.⁵: **B26D 1/00**

(21) Anmeldenummer: **88115861.2**

(22) Anmeldetag: **27.09.88**

(54) **Schneidwerkzeug für Werkstücke aus langfaserigen Materialien.**

(30) Priorität: **28.11.87 DE 3740435**

(43) Veröffentlichungstag der Anmeldung:
**07.06.89 Patentblatt 89/23**

(45) Bekanntmachung des Hinweises auf die
Patenterteilung:
**02.01.92 Patentblatt 92/01**

(84) Benannte Vertragsstaaten:
**ES FR GB IT SE**

(56) Entgegenhaltungen:
**DE-A- 2 751 639**
**FR-A- 2 445 201**
**GB-A- 2 135 621**
**GB-A- 2 182 596**

(73) Patentinhaber: **Pelzer, Helmut**
**Neue Strasse 5**
**W-5804 Herdecke-Ende(DE)**

(72) Erfinder: **Pelzer, Helmut**
**Neue Strasse 5**
**W-5804 Herdecke-Ende(DE)**

(74) Vertreter: **Schneider, Wilhelm, Dipl.-Phys.**
**Danziger Weg 9**
**W-3052 Bad Nenndorf(DE)**

EP 0 318 659 B1

## Beschreibung

Die Erfindung betrifft ein Schneidwerkzeug für Werkstücke aus langfaserigem Material, Verbundwerkstücken aus mehrschichtigen Materialien von denen mindestens eines langfaserig ist oder dergleichen, das aus einem ortsfesten Gegenmesser besteht dessen Schneidkante durch eine abgestufte Formkante, insbesondere des feststehenden Teiles eines Preßformwerkzeuges gebildet ist und aus einem relativ zu dem Gegenmesser in einer Richtung bewegbaren Messer, das durch eine Formkante, insbesondere des bewegbaren Teiles des Preßformwerkzeuges gebildet ist. Ein derartiges Schneidwerkzeug ist aus der DE-A-27 51 639 bekannt.

Insbesondere beim Abschneiden von überflüssigen Randkanten von Werkstücken aus langfaserigem Material oder auch Verbundwerkstücken aus mehrschichtigen Materialien von denen mindestens eines, vorzugsweise die äußere Schicht langfaserig ist, wie sie beispielsweise zum Auskleiden von Innenräumen von kraftfahrzeugen benutzt werden, sind bisher zwei Möglichkeiten üblich, um eine saubere Schnittkante zu erreichen.

Die eine Möglichkeit besteht darin, daß beispielsweise die Schnittkante der oberen Formhälfte eines Preßformwerkzeuges, in dem die betreffenden Materialien geformt oder mit Schaumschichten versehen werden, in Richtung auf die Schnittkante der unteren Formhälfte des Preßformwerkzeuges als Messer vorsteht, sodaß beim Absenken der oberen Formhälfte auf die untere Formhälfte beziehungsweise den Tisch für das Preßformwerkzeug, die relativ dicke Materialschicht, die zu durchtrennen ist, zunächst durch das Messer eingedrückt und dann abgetrennt wird, wobei es sich zwangsläufig ergeben muß, daß die relativ oben liegende Materialschicht weiter abgeschnitten wird als die zuunterst liegende, meist faserige Schicht, sodaß nach Entnahme des Werkstückes aus der Form, bzw. aus dem Schneidwerkzeug die oben liegende Deckschicht gegenüber der unten liegenden Bodenschicht zurücksteht. Um diesem Problem auszuweichen wird auch die äußere Randkante des Formwerkzeugtisches als Gegenmesser benutzt und die relativ obere Formhälfte mit der als Messerkante ausgebildeten Randkante an dieser Kante des unteren Teiles vorbeilaufen gelassen, sodaß hierdurch eine Abtrennung im gewünschten Bereich erfolgen kann. Auch hierbei werden die Deckschichten, also die im Werkzeug oben liegenden Schichten, zu weit abgeschnitten und stehen im Endzustand gegenüber der unten liegenden Schicht zurück.

Desweiteren zeigt sich, daß insbesonder bei faserigen Werkstoffen diese Werkstoffe zwischen die Schneidkanten mit eingezogen werden, sodaß keine sauberen Schnitte zu erreichen sind. Darüber hinaus bedurfte es einer häufigen Nachjustierung und Einstellung der zusammenwirkenden Messerkanten um ausreichende Schnittqualität gwewährleisten zu können.

Ausgehend von diesem Stand der Technik liegt der Erfindung die Aufgabe zugrunde, ein Schneidwerkzeug der eingangs beschriebenen Art zu schaffen, mit dem ein weitgehend orthogonaler Schnitt an der Randkante eines relativ dicken Werkstückes aus Schaummaterial und Fasermaterial oder lediglich aus Fasermaterial durchgeführt werden kann, wobei eine Mitnahme von Faserwerkstoff in den Schnittkantenbereich ausgeschlossen sein soll und einfache Nachstellmöglichkeiten bei Verschleiß der Schneidkanten ermöglicht sein sollen.

Zur Lösung dieser Aufgabe schlägt die Erfindung vor, daß die Schneidkante des bewegbaren Messers in einer Fläche liegt, die mit der Richtung der Bewegung dieses Messers einen spitzen Winkel bildet, wobei diese Fläche in der Schnittlage derart angeordnet ist, daß sie die Schneidkante des Gegenmessers spitzwinklig kreuzt.

Durch diese Ausbildung, bei der praktisch die Schneidkante des bewegbaren Messers durch eine Schrägfläche gebildet ist, die auf die Schneidkante des Gegenmessers aufläuft, ist einerseits sichergestellt, daß der Schneidvorgang bezüglich beim Schneiden zusammengepreßter Schichten des Werkstückes erst beim Auftreffen der Schneidkante des Gegenmessers auf die Schrägfläche des bewegbaren Messers bewirkt wird.

Andererseits ist ein Einziehen von Fasermaterial in den Schneidweg ausgeschlossen, da lediglich eine Schneidkante an einer Schneidfläche anliegt, nicht aber zwei Flächen als Schneidflächen aneinander vorbeigleiten. Schließlich ist es auch möglich, den Verschleiß von Gegenmesser bzw. bewegbarem Messer dadurch auszugleichen, daß das Teil welches das bewegbare Messer umfaßt geringfügig weiter abgesenkt wird.

Insgesamt wird mit der erfindungsgemäßen Ausbildung eine hervorragende Schnittqualität bei den hier interessierenden Materialien erreicht, wobei es sich dabei häufig um Fasermaterialien handelt, die einseitig mit PUR-Schaumschichten belegt sind.

Bevorzugt ist ferner vorgesehen, daß das Gegenmesser durch die Randkante eines im wesentlichen ebenen Tisches des Preßformwerkzeuges gebildet ist und daß der Tisch von einer gegen ihn in einer Richtung bewegbaren Hälfte des Preßformwerkzeuges übergreifbar ist deren konische Seitenwandungen die Fläche bilden in der die Schneidkante des bewegbaren Messers liegt.

Um zu vermeiden, daß das bewegbare Messer zu weit in Richtung auf das Gegenmesser abgesenkt wird, wird vorgeschlagen, daß an dem feststehenden Teil des Preßformwerkzeuges ein Wegbegrenzungsanschlag fest gehaltert ist an dem in Schnittstellung der bewegbare Teil des Preßformwerkzeuges anliegt.

Der Wegbegrenzungsanschlag ist vorzugsweise so angeordnet, daß, noch ein geringer Weg für die Weiterführung des bewegbaren Messers zur Verfügung steht, sobald die Schneidfläche auf die Schneidkante des ortsfesten Gegenmessers aufgetroffen ist. Dieser geringfügige Weg entspricht etwa der Materialelastizität der eingangs zum Eingriff kommenden Schneidkante bzw. Schneidfläche.

Des weiteren ist bevorzugt vorgesehen, daß die bewegbare Hälfte des Preßformwerkzeuges einen Vorsprung aufweist, der einen geringeren Abstand vom Tisch des Preßformwerkzeuges hat als der Boden der bewegbaren Hälfte des Preßformwerkzeuges.

Durch diesen an der bewegbaren Hälfte vorgesehenen Vorsprung wird in unmittelbarer Nähe der späteren Schnittstelle das zu beschneidende Werkstück zusammengepreßt und so für den Schneidvorgang vorbereitet, sodaß der Schnitt eine noch bessere Qualität besitzt.

Zwei Ausführungsbeispiele der Erfindung sind in der Zeichnung grob schematisch dargestellt und im folgenden näher beschrieben.

Es zeigt:

Figur 1 im Schnitt eine erste Ausführungsform eines Schneidwerkzeuges, stark vereinfacht.

Figur 2 eine andere Ausführungsform in gleicher Darstellung.

Im Ausführungsbeispiel ist ein Werkstück aus einer PUR-Schaumstoffschicht 1 und einer Schicht aus langfaserigem Material 2 in ein allgemein mit 3 bezeichnetes Schneidwerkzeug eingelegt. Das Schneidwerkzeug besteht aus einem ortsfesten Gegenmesser 4, welches durch die Formkante eines im wesentlichen ebenen Preßformwerkzeuges 5 gebildet ist. Ein relativ zu letzterem bewegbar ausgebildetes Messer 6 ist durch eine Fläche gebildet, die mit der Bewegungsebene des Messers 6, angedeutet bei 7, eine spitzen Winkel bildet. Diese Fläche ist in der Schnittlage, die in der Figur dargestellt ist so angeordnet, daß sie die Schneidkante des Gegenmessers 4 kreuzt. Die die Schneidkante des bewegbaren Messers enthaltende Fläche ist Bestandteil einer oberen Hälfte 8 des Preßformwerkzeuges, die den Tisch des Preßformwerkzeuges 5 randseitig übergreift und dazu konische Seitenwandungen aufweist, die die Schneidkante des bewegbaren Messers enthalten.

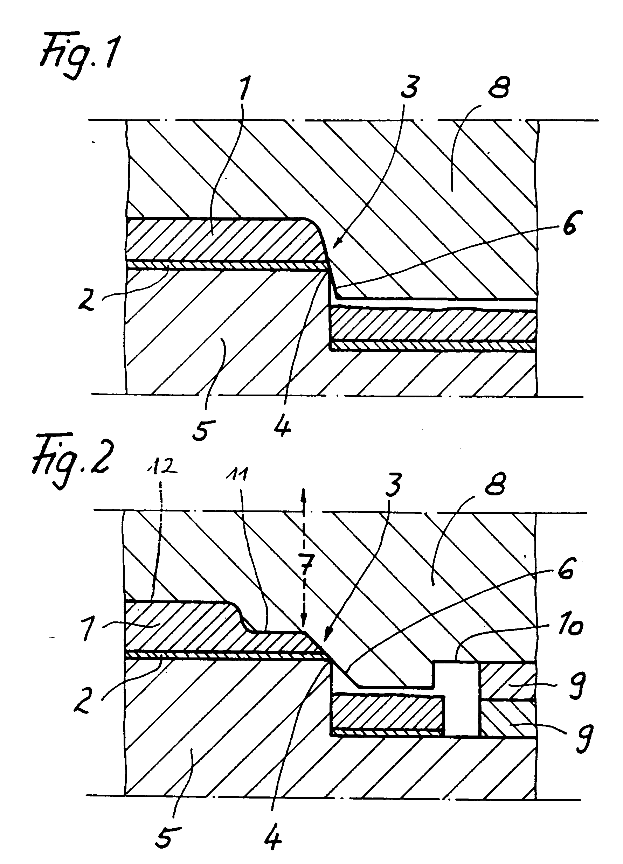

Beim Ausführungsbeispiel nach Figur 2 ist ein einstellbarer Wegbegrenzungsanschlag 9 vorgesehen an welchen ein Teil 10 der oberen Hälfte 8 des Preßformwerkzeuges, das das bewegbare Messer 6 führt, in der dargestellten Schnittstellung anliegt.

Bei eventuellem Verschleiß der Teile 4 oder 6 ist ein Nachstellen durch Veränderung des Wegbegrenzungsanschlages 9 sehr einfach möglich.

Als Besonderheit beim Ausführungsbeispiel gemäß Figur 2 ist noch zu vermerken, daß die bewegbare Hälfte 8 einen Vorsprung 11 aufweist, der geringeren Abstand vom Tisch des Preßformwerkzeuges hat als der Boden 12 der Hälfte 8. Hierdurch wird im Bereich des Vorsprunges 11 das Material 1,2 zusammengepreßt und verfestigt, sodaß eine bessere Schnittqualität im Bereich des Schneidwerkzeuges 4,6 erreichbar ist.

**Patentansprüche**

1. Schneidwerkzeug für Werkstücke aus langfaserigem Material, Verbundwerkstücken aus mehrschichtigen Materialien von denen mindestens eines langfaserig ist oder dergleichen, bestehend aus einem
   ortsfesten Gegenmesser, dessen Schneidkante durch eine abgestufte Formkante, insbesondere des festehenden Teiles eines Preßformwerkzeuges gebildet ist
   und einem
   relativ zu dem Gegenmesser in einer Richtung bewegbaren Messer, das durch eine Formkante insbesondere des bewegbaren Teiles des Preßformwerkzeuges gebildet ist,
   **dadurch gekennzeichnet,**
   daß die Schneidkante des bewegbaren Messers (6) in einer Fläche liegt, die mit der Richtung (7) der Bewegung dieses Messers (6) einen spitzen Winkel bildet, wobei diese Fläche in der Schnittlage derart angeordnet ist, daß sie die Schneidkante des Gegenmesser (4) spitzwinklig kreuzt.

2. Schneidwerkzeug nach Anspruch 1,
   **dadurch gekennzeichnet,**
   daß das Gegenmesser (4) durch die Randkante eines im wesentlichen ebenen Tisches des Preßformwerkzeuges gebildet ist, und daß der Tisch von einer gegen ihn in einer Richtung bewegbaren Hälfte (8) des Preßformwerkzeuges übergreifbar ist deren konische Seitenwandungen die Fläche bilden in der die Schneidkante des bewegbaren Messers (6) liegt.

3. Schneidwerkzeug nach Anspruch 1 oder 2,
   **dadurch gekennzeichnet,**
   daß an dem feststehenden Teil des Preßformwerkzeuges ein Wegbegrenzungsanschlag (9) fest gehaltert ist an dem in Schnittstellung der bewegbare Teil des Preßformwerkzeuges anliegt.

4. Schneidwerkzeug nach Anspruch 1 bis 3 oder einem derselben,

**dadurch gekennzeichnet,**

daß die bewegbare Hälfte (8) des Preßformwerkzeuges einen Vorsprung (11) aufweist, der
einen geringeren Abstand vom Tisch (5) des
Preßformwerkzeuges hat als der Boden (12)
der bewegbaren Hälfte (8) des Preßformwerkzeuges.

## Claims

1. Cutting tool for workpieces of material having
long fibres, composite workpieces of multi-layered materials of which at least one has long
fibres, or the like, consisting of a fixed counter-
blade whose cutting edge is formed by a
stepped forming edge, in particular of the movable part of a press die, and a blade which can
be moved relative to the counter-blade in one
direction and is formed by a forming edge in
particular of the movable part of the press die,
characterized in that the cutting edge of the
movable blade (6) lies in a surface which forms
an acute angle with the direction (7) of movement of this blade (6), this-surface being arranged in the cutting position in such a way
that it crosses the cutting edge of the counter-
blade (4) at an acute angle.

2. Cutting tool according to Claim 1, characterized in that the counter-blade (4) is formed by
the marginal edge of an essentially flat table of
the press die, and in that the table can be
overlapped by a half (8), movable towards it in
one direction, of the press die, the conical side
walls of which half (8) form the surface in
which the cutting edge of the movable blade
(6) lies.

3. Cutting tool according to Claim 1 or 2, characterized in that a travel limit stop (9) is securely mounted on the fixed part of the press
die, on which travel limit stop (9) the movable
part of the press die bears in the cutting position.

4. Cutting tool according to Claims 1 to 3 or one
of the same, characterized in that the movable
half (8) of the press die has a projection (11)
which is at a smaller distance from the table
(5) of the press die than the base (12) of the
movable half (8) of the press die.

## Revendications

1. Outil de découpage pour pièces à usiner, composées de matériau à fibres allongées, pour
pièces à usiner composites, composées de matériau à couches multiples, dont au moins
une est à fibres allongées, ou similaires, se
composant d'une contre-lame fixe formée par
une arête de moule étagé, en particulier de la
partie fixe d'un moule de compression, et
d'une lame mobile par rapport à la contre-lame
qui est constituée par une arête de moule, en
particulier par la partie mobile du moule de
compression, caractérisé en ce que l'arête de
coupe de la la lame mobile (6) appartient à
une surface qui forme un angle aigu avec la
direction de déplacement de cette lame (6) et
en position de coupe, cette surface de croise
suivant un angle aigu, l'arête de coupe de la
contre-lame (4).

2. Outil de découpage selon la revendication 1,
caractérisé en ce que la contre-lame (4) est
formée par l'arête du bord d'une table de
moule (5) sensiblement plane et en ce qu'une
moitié (8) mobile du moule de compression
peut passer par-dessus la table, moitié dont
les parois latérales coniques ferment la surface
qui contient l'arête de coupe de la lame mobile
(6).

3. Outil de découpage selon la revendication 1 ou
2, caractérisé en ce qu'une butée de limitation
de course (9) est solidaire de la partie fixe du
moule de compression, butée contre laquelle
s'applique la partie mobile de l'outil de pressage, en position de découpe.

4. Outil de découpage selon les revendications 1
à 3, caractérisé en ce que la moitié mobile (8)
du moule présente une saillie (11) moins éloignée de la table du moule de compression (5)
que du fond (12) de la moitié mobile (8) du
moule.

*Fig.1*

*Fig.2*